# EUROPÄISCHE PATENTANMELDUNG

(11) **EP 0 665 347 A1**
(43) Veröffentlichungstag der Anmeldung: **02.08.1995**
(21) Anmeldenummer: 94106658.1
(22) Anmeldetag: 28.04.1994
(51) Int. Cl.: E04F 15/02, B32B 5/22

(54) **Plattenförmiges Bodenelement und Verfahren zu dessen Herstellung**

(30) Priorität: 27.01.1994 DE 4402352
(71) Anmelder: DLW Aktiengesellschaft, D-74321 Bietigheim-Bissingen (DE)
(72) Erfinder: Markmann, Ole, D-27749 Delmenhorst (DE)
(74) Vertreter: Eisenführ, Speiser & Partner

(57) **Zusammenfassung**

Es wird ein plattenförmiges Bodenelement angegeben, welches mindestens eine starre Trägerschicht (2) und eine auf der Trägerschicht (2) kraftschlüssig verklebte Deckschicht (4) aus Linoleum aufweist.

## Beschreibung

Die Erfindung betrifft ein plattenförmiges Bodenelement und ein Verfahren zu dessen Herstellung.

Ebene, plattenförmige Bodenelemente aus verschiedenen Materialien, wie z.B. aus Keramik oder aus Kunststoff sind bekannt. Linoleum mit seinen bekannten, günstigen Eigenschaften wurde bisher noch nicht erfolgreich als plattenförmige Bodenelemente eingesetzt, da die Maßbeständigkeit des Linoleums, insbesondere bei Temperaturschwankungen oder Feuchtigkeitsschwankungen nicht immer zufriedenstellend ist, und da es nach Verlegung von plattenförmigem Linoleum zu unerwünschter Spaltbildung oder zu einem Aufschieben kommen kann.

Aufgabe der Erfindung ist es, plattenförmige, maßhaltige Bodenelemente aus Linoleum anzugeben, deren exakte Verlegung auch durch Laien möglich ist. Aufgabe ist ferner ein Verfahren zur Herstellung der plattenförmigen Bodenelemente anzugeben, welches in einfacher Weise durchführbar ist.

Diese Aufgabe wird bei plattenförmigen Bodenelementen erfindungsgemäß gelöst durch mindestens eine starre Trägerschicht und eine auf die Trägerschicht kraftschlüssig verklebte Deckschicht aus Linoleum.

Die Aufgabe wird ferner durch ein Verfahren gelöst, welches folgende Verfahrensschritte enthält:
es wird eine Deckschicht aus Linoleum, eine Trägerschicht aus einer MDF-Platte und eine Gegenzugschicht aus reißfestem Papier kraftschlüssig zu einem Laminat verklebt,
das Laminat wird in mehrere Platten getrennt,
anschließend wird das Profil der Umfangskanten in einem Arbeitsgang an jeder Platte angefräst.

Die Vorteile der Erfindung liegen insbesondere darin, daß plattenförmige Bodenelemente verwirklicht werden, die eine Linoleum-Deckschicht aufweisen, wobei sich die Deckschicht durch die kraftschlüssige Verklebung mit der Trägerschicht bei Temperatur- oder Feuchtigkeitsschwankungen nur noch in dem gleichen geringen Maß wie die Trägerschicht selbst verformen kann. Dadurch wird eine größere Formbeständigkeit der einzelnen Bodenelemente erreicht. Ein mit solchen Bodenplatten gebildeter Fußboden behält daher seine Struktur bei, eine Spaltbildung zwischen den einzelnen Bodenplatten oder den Linoleum-Deckschichten in Folge von Temperaturänderungen wird vermieden.

Die Vorteile des erfindungsgemäßen Verfahrens liegen darin, daß die plattenförmigen Bodenelemente in wenigen Verfahrensschritten auf einfache Weise hergestellt werden. Insbesondere wird das Profil der Umfangskanten sowohl in der Trägerschicht als auch in dem Linoleum in einem gemeinsamen Arbeitsgang angefräst; die Einarbeitung des Umfangskantenprofils in mehreren Arbeitsschritten wird vermieden.

Die Bodenelemente sind bevorzugt so ausgebildet, daß die Trägerschicht an ihrem Umfang mindestens abschnittsweise Nuten, und an vorgegebenen anderen Umfangsabschnitten entsprechende Federn aufweist. Dadurch ist ein einfaches Zusammenfügen der Bodenelemente zu einem einheitlichen Belag möglich, besonders bevorzugt werden benachbarte Bodenplatten noch miteinander verleimt. Zu diesem Zweck wird in die Nut/Federverbindungen Leim zugegeben. Dadurch wird die unerwünschte Spaltbildung zwischen den Bodenplatten bei Temperatur- oder Feuchtigkeitsschwankungen zuverlässig verhindert, wenn als Trägerschicht ein Material, z.B. eine MDF-Platte eingesetzt wird, das eine hohe Maßhaltigkeit besitzt.

Gemäß einer besonders bevorzugten Ausführungsform der Erfindung ist das Profil der Platte an ihrer Umfangskante so ausgebildet, daß benachbarte Bodenelemente beim Zusammenfügen im Bereich der Trägerschicht aneinanderstoßen und mindestens im Bereich der Deckschicht zwischen den benachbarten Bodenelementen eine Dichtungsfuge vorgegebener Breite entsteht. Diese Dichtungsfuge wird beim oder nach dem Verlegen dann mit einem elastischen wasserfesten Dichtungsmaterial, z.B. dem beim Verkleben der Platten verwendeten Leim, ausgefüllt, um zu verhindern, daß zwischen den benachbarten Linoleum-Deckschichten Feuchtigkeit nach unten in die Trägerschicht eindringt und diese zerstört. Außerdem folgt das elastische Dichtungsmaterial den unvermeidlichen Ausdehnungen/Kontraktionen der Deckschicht und dichtet auch dabei den Zwischenraum zwischen benachbarten Bodenelementen zuverlässig ab. Schließlich werden durch die definierte Breite der Dichtungsfuge geringe unvermeidliche Fertigungstoleranzen ausgeglichen und weitgehend unsichtbar gemacht. Erfindungsgemäß entsteht beim Verlegen der Bodenplatten - unter Zugabe von elastischem Dichtungsmaterial, beispielsweise Leim etc., ein fest verbundener, homogener und zur Trägerschicht hin abgedichteter Bodenbelag, der als Deckschicht einzelne Linoleumplatten aufweist.

Besonders bevorzugt ist das Profil der Platten an der Umfangskante so ausgebildet, daß benachbarte Bodenelemente mit ihrer Nut und Feder aneinander zur Anlage kommen, und daß die vorgegebene Dichtungsfuge über der Nut/Federverbindung gebildet wird. Alternativ lassen sich die Bodenelemente so ausbilden, daß benachbarte Bodenelemente unterhalb der Nut/Federverbindung mit Stoß zur Anlage kommen, daß im Bereich der Nut/Federverbindung ein ausreichender Zwischenraum zur Aufnahme von Leim und oberhalb der Nut/Federverbindung eine Dichtungsfuge in vorgegebener Breite entsteht, die den aus der Nut/Federverbindung herausquellenden Leim und/oder gegebenenfalls zusätzlich von oben in die Dichtungsfuge eingeführtes elastisches Dichtungsmaterial aufnimmt.

Gemäß einer besonders bevorzugten Ausführungsform der Erfindung ist die Dichtungsfuge zwischen benachbarten Bodenelementen im Bereich der Deckschicht verbreitert. Zu diesem Zweck ist in der Deckschicht eine umlaufende Dichtungsnut angeordnet, welche eine lokale Verbreiterung der Dichtungsfuge bildet. Bevorzugt wird die Dichtungsfuge nach oben hin wieder auf eine vorgegebene geringe Breite reduziert, um den Eintrittsspalt für Feuchtigkeit etc. gering zu halten. Die Verbreiterung der Dichtungsfuge im Bereich der Linoleum-Deckschicht hat den Vorteil, daß eine ausreichende Menge an elastischem Dichtungsmaterial in der Dichtungsfuge aufgenommen werden kann, um sicher zu stellen, daß auch beim Arbeiten der Deckschichten die Dichtungsfuge mit Material ausreichend ausgefüllt bleibt.

Bevorzugt ist an der freien Kante der Deckschicht eine Fase angebracht, damit das Linoleum an dieser Kante nicht ausbricht, und damit beim eventuellen Versiegeln des Bodenbelages die Versiegelungsmasse in die Dichtungsfuge hineinlaufen, und die Dichtungsfuge an ihrer Oberfläche verschließen kann.

Vorteilhafterweise ist unter der Trägerschicht eine Gegenzug-Schicht aus reißfestem Material, bevorzugt wasserdichtem Papier angebracht, um die Zugkräfte zu kompensieren, welche durch die aufgeklebte Linoleum-Deckschicht entstehen.

Als Trägerschicht wird bevorzugt eine MDF-Platte eingesetzt, welche eine hohe Maßhaltigkeit gewährleistet.

Vorteilhafte Weiterbildungen der Erfindung sind durch die Merkmale der Unteransprüche gekennzeichnet.

Im folgenden werden Ausführungsbeispiele anhand der Zeichnung näher erläutert. Es zeigen:
- Fig. 1: eine erste Ausführungsform der plattenförmigen Bodenelemente, wobei zwei benachbarte Bodenelemente zusammengefügt dargestellt sind;
- Fig. 2: eine zweite Ausführungsform der plattenförmigen Bodenelemente, wobei zwei benachbarte Bodenelement zusammengefügt dargestellt sind; und
- Fig. 3: eine Aufsicht auf ein plattenförmiges Bodenelement gemäß den Figuren 1 oder 2.

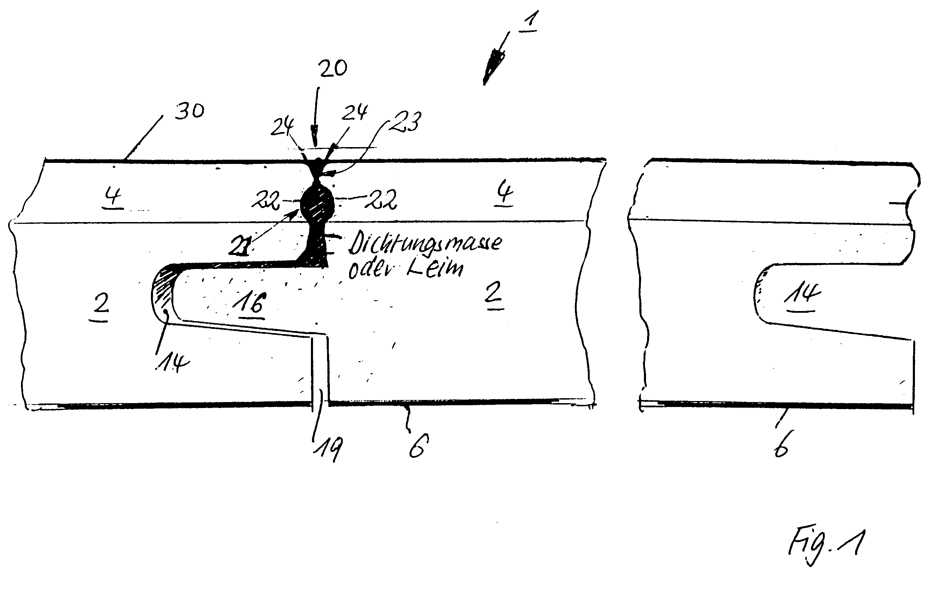

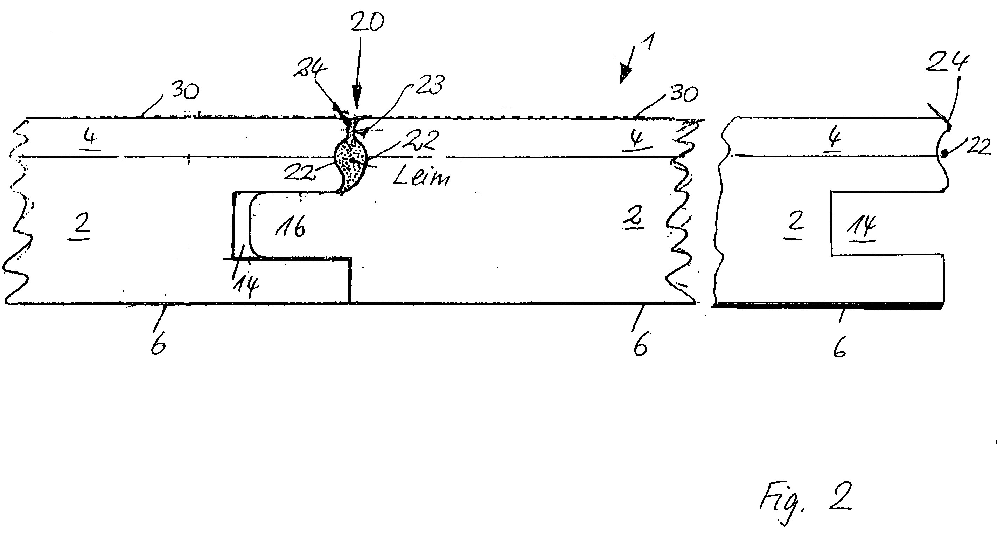

Die Figuren 1 und 2 zeigen einen Querschnitt durch plattenförmige Bodenelement oder Bodenplatten 1, die eine starre Trägerschicht 2 aus einer MDF-Platte besitzen, auf welche kraftschlüssig eine Deckschicht 4 aus Linoleum aufgeklebt ist. Unter der Trägerschicht 2 ist eine Gegenzug-Schicht 6 aus reißfestem, wasserdichtem Papier aufgeleimt, welche die durch die Deckschicht hervorgerufenen Kräfte kompensiert und dadurch die Ebenheit der Bodenplatten sicherstellt.

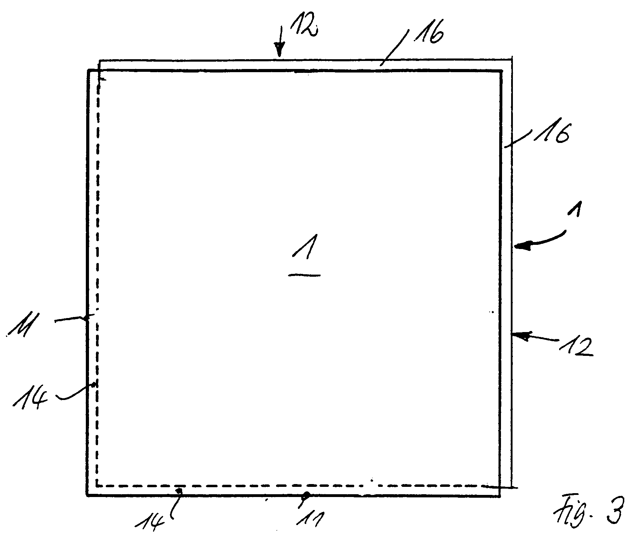

Wie insbesondere Figur 3 entnehmbar ist, besitzt die Bodenplatte 1 an vorgegebenen Umfangsabständen 11 mindestens eine Nut 14, und an anderen anschließenden Umfangsabschnitten 12 eine der Nut 14 entsprechende Feder. Das Profil der Umfangskante in den Umfangsabschnitten 11 und 12 ist so ausgebildet, daß benachbarte Bodenelemente 1 beim Zusammenfügen im Bereich der Trägerschicht 2 zur Anlagen kommen, und daß über der Nut/Federverbindung dabei eine Dichtungsfuge 20 entsteht, welche eine vorgegebene Mindestbreite aufweist.

In der Ausführungsform gemäß Figur 1 verjüngt sich die Feder 16 und die Fuge 14 zum freien Ende bzw. zur Basis der Nut hin, beide Bodenplatten 1 kommen in dieser Ausführungsform an den schrägen Flanken der Nut/Federverbindung zur Anlage und bilden eine keilförmige Verklemmung, welche unter Zugabe von Leim unlösbar verbunden ist.

Die Trägerschicht 2 ist nach unten hin so bemessen, daß sich unterhalb der Nut/Federverbindung - in der dargestellten Ausführungsform - eine Zwischenfuge 19 ergibt. Die Trägerschicht 2 und insbesondere die Deckschicht 4 sind ferner so bemessen, daß sich über der Nut/Federverbindung eine Dichtungsfuge 20 ergibt, die im Bereich der Deckschicht 4 eine Verbreiterung 21 und nach oben hin anschließend eine Einschnürung 23 vorgegebener geringerer Spaltbreite erfährt. Zur Verwirklichung der Verbreiterung 21 der Fuge ist über den Nuten 14 und Federn 16 - mindestens teilweise in der Deckschicht 4 - eine umlaufende Dichtungsnut 22 vorgesehen. Die Verbreiterung 21 der Dichtungsfuge 20 befindet sich teilweise oder ganz in der Deckschicht 4 und wird beim oder nach dem Verlegen mit einer elastischen Dichtungsmasse, z.B. einem wasserfesten, zum Zusammenkleben der Bodenplatten verwendeten Leim ausgefüllt, um ein Eindringen von Feuchtigkeit oder Wasser in die Trägerschicht 2, welche wegen der hohen Maßhaltigkeit aus einer wasserempfindlichen MDF-Platte besteht, wirksam zu verhindern.

Die Verbreiterung 21 der Dichtungsfuge 20 hat den Zweck, daß auch bei einer temperaturbedingten Kontraktion der Linoleum-Deckschichten eine ausreichende Menge an elastischer Dichtungsmasse in der Dichtungsfuge vorhanden ist, so daß die Dichtungsmasse ihre Funktion zuverlässig erfüllt und nicht reißt. Die nach oben hin sich anschließende Verengung 23 der Dichtungsfuge 20 hat die Aufgabe, den Spalt für eindringendes Wasser oder Feuchtigkeit möglichst klein zu halten. Außerdem weist die freie Kante der Deckschicht 4 ein Fase 24 auf, wodurch sich die Dichtungsfuge zur Oberfläche hin wieder verbreitert. Diese Fase 24 dient dazu, die Dichtungsfuge 20 optisch ausreichend breit erscheinen zu lassen, damit Fertigungstoleranzen oder Verlegungstoleranzen klein gegen die scheinbare Breite der Dichtungsfuge 20 sind und daher wenig wahrgenommen werden.

Beim anschließenden Versiegeln des Bodenbelages wird eine Versiegelungsschicht 30 aufgebracht, und die Versiegelungsmasse füllt den oberen Bereich der Dichtungsfuge 20 aus, so daß ein ebener, versiegelter, ästhetisch ansprechender Bodenbelag entsteht.

Die Bodenplatten 1 gemäß der Ausführungsform nach Figur 2 besitzen an ihrer Umfangskante ein Profil, welches durch eine im wesentlichen rechteckförmige Feder 16 und eine entsprechende Nut 14 gekennzeichnet ist. Das Profil der Umfangskante ist dabei so ausgebildet, daß die Trägerschicht 2 unterhalb der Nut/Federverbindung mit Stoß in Anlage kommt, wenn zwei Bodenplatten 1 zusammengefügt werden. Bei Zugabe von Leim wird dadurch außerdem verhindert, daß von unten Feuchtigkeit in die Trägerschicht 2 eindringen kann, die bevorzugt als MDF-Platte (mittelverdichtete Faserplatte) ausgebildet, und daher wasserempfindlich ist.

Das gesamte Umfangskantenprofil der Trägerschicht wird zusätzlich noch durch eine Grundierung geschützt, die ein Eindringen von Feuchtigkeit in die Trägerschicht verhindert.

Über der Nut/Federverbindung schließt eine Dichtungsfuge 20 an, die teilweise in der Trägerschicht 2, anschließend in der Linoleum-Deckschicht 4 eine Verbreiterung 21, und in der Deckschicht anschließend nach oben hin eine Verengung 23 besitzt, wobei die Dichtungsfuge 20 nach oben hin durch die Fasen 24 der freien Kanten der Deckschicht 2 optisch verbreitert ist. Werden diese erfindungsgemäßen Bodenplatten 1 unter Zugabe von Leim aneinandergefügt, so wird Leim in die Dichtungsfuge gedrückt und verschließt die Dichtungsfuge 20 gegen Feuchtigkeit. Schließlich wird beim Aufbringen einer Versiegelungsschicht 30 die Dichtungsfuge auch von oben durch Versiegelungsmasse geschlossen und dadurch mit der übrigen Oberfläche des Bodenbelags planiert.

Figur 3 zeigt eine Draufsicht auf eine Bodenplatte 1, die an zwei benachbarten Umfangsabschnitten 11 eine Nut 14, und zwei anderen Umfangsabschnitten 12 eine entsprechende Feder 16 aufweist.

## Patentansprüche

**1.** Plattenförmiges Bodenelement,
gekennzeichnet durch mindestens eine starre Trägerschicht (2) und einer auf der Trägerschicht (2) kraftschlüssig verklebten Deckschicht (4) aus Linoleum.

**2.** Plattenförmiges Bodenelement nach Anspruch 1,
dadurch gekennzeichnet, daß die Trägerschicht (2) an vorgegebenen Umfangsabschnitten (11) mindestens eine Nut (14), und an anderen vorgegebenen Umfangsabschnitten (12) eine der Nut (14) entsprechende Feder (16) aufweist.

**3.** Plattenförmiges Bodenelement nach Anspruch 2,
dadurch gekennzeichnet, daß das Profil der Umfangskante so ausgebildet ist, daß benachbarte Bodenelemente (1) beim Zusammenfügen im Bereich der Trägerschicht (2) zur Anlage kommen und mindestens im Bereich der Deckschicht (4) eine Dichtungsfuge (20) vorgegebener Breite entsteht.

**4.** Plattenförmiges Bodenelement nach Anspruch 3,
dadurch gekennzeichnet, daß beim Zusammenfügen benachbarte Bodenelemente (1) in ihrer Nut (14) und Feder (16) zur Anlage kommen und über der Nut/Federverbindung eine Dichtungsfuge (20) vorgegebener Breite entsteht.

**5.** Plattenförmiges Bodenelement nach Anspruch 3,
dadurch gekennzeichnet, daß beim Zusammenfügen benachbarte Bodenelemente unterhalb der Nut/Federverbindung zur Anlagen kommen, und über der Nut/Federverbindung eine Dichtungsfuge (20) vorgegebener Breite entsteht.

**6.** Plattenförmiges Bodenelement nach einem der vorstehenden Ansprüche,
dadurch gekennzeichnet, daß über den Nuten (14) und Federn (16) eine Dichtungsnut (22) am Umfang umläuft.

**7.** Plattenförmiges Bodenelement nach Anspruch 6,
dadurch gekennzeichnet, daß die Dichtungsnut (22) in der Deckschicht (4) am Umfang umläuft.

**8.** Plattenförmiges Bodenelement nach einem der vorstehenden Ansprüche,
dadurch gekennzeichnet, daß die freie Kante der Deckschicht (4) eine Fase (24) aufweist.

**7.** Plattenförmiges Bodenelement nach einem der vorstehenden Ansprüche,
dadurch gekennzeichnet, daß unter der Trägerschicht (2) eine Gegenzug-Schicht (6) aus reißfestem Material aufgeleimt ist.

**8.** Plattenförmiges Bodenelement nach Anspruch 7,
dadurch gekennzeichnet, daß die Gegenzugschicht aus wasserdichtem Papier besteht.

**9.** Plattenförmiges Bodenelement nach einem der vorstehenden Ansprüche,
dadurch gekennzeichnet, daß die Trägerschicht eine MDF-Platte ist.

**10.** Plattenförmiges Bodenelement nach einem der vorstehenden Ansprüche,
dadurch gekennzeichnet, daß die profilierten Umfangskanten der Trägerschicht mit einem wasserundurchlässigen Grundierungsanstrich versehen sind.

**11.** Verfahren zum Herstellen plattenförmiger Bodenelemente nach einem der Ansprüche 1 bis 10 gekennzeichnet durch folgende Verfahrensschritte:
es wird eine Deckschicht aus Linoleum, eine Trägerschicht aus einer MDF-Platte und eine Gegenzugschicht aus reißfestem Papier kraftschlüssig zu einem Laminat verklebt,
das Laminat wird in mehrere Platten getrennt,
anschließend wird das Profil der Umfangskanten in einem Arbeitsgang an jeder Platte angefräst.

**12.** Verfahren nach Anspruch 11,
dadurch gekennzeichnet, daß die Umfangskanten der Trägerschicht nach dem Profilieren wasserundurchlässig grundiert werden.
